# EUROPÄISCHE PATENTSCHRIFT

(11) **EP 1 361 382 B1**
(45) Veröffentlichungstag und Bekanntmachung des Hinweises auf die Patenterteilung: **20.04.2005**
(21) Anmeldenummer: 03012550.4
(22) Anmeldetag: 09.08.1999
(51) Int. Cl.: F16K 27/02, F16K 1/38, F16K 37/00

(54) **Ventilanordnung zur Steuerung des Materialflusses in einer Beschichtungsanlage**
Valve assembly for controlling material flow in a coating plant
Ensemble de soupapes pour la commande de l'écoulement du matériau dans une installation de revêtement

(30) Priorität: 12.08.1998 DE 19836604
(43) Veröffentlichungstag der Anmeldung: 12.11.2003
(62) Teilanmeldung aus: 99115688.6
(73) Patentinhaber: Dürr Systems GmbH, 70435 Stuttgart (DE)
(72) Erfinder: Baumann, Michael, 74223 Flein (DE); Rupertus, Frank, 74321 Bietigheim-Bissingen (DE)
(74) Vertreter: Heusler, Wolfgang, Dipl.-Ing.

(56) Entgegenhaltungen:
- EP-A- 0 107 808
- WO-A-85/00868
- DE-A- 2 048 525
- GB-A- 825 430
- US-A- 3 348 570
- US-A- 4 064 908
- US-A- 4 548 235
- US-A- 4 982 897
- US-A- 5 368 273
- US-A- 5 653 249
- US-A- 5 706 859
- US-A- 5 771 931

## Beschreibung

Die Erfindung betrifft eine Ventilanordnung mit einer Ventileinheit zur Steuerung des Materialflusses in einer Beschichtungsanlage gemäß dem Oberbegriff des Anspruchs 1.

Eine solche Ventilanordnung eignet sich insbesondere für die Farbwechselblöcke und Funktionsventile zur Steuerung des Farbflusses im Bereich der Lackiertechnik, namentlich bei der Serienbeschichtung von Kraftfahrzeugkarossen (DE-A 3 221 326).

An sich sind seit langem Steuerventile für verschiedene Zwecke mit Einrichtungen zur Anzeige der Ventilstellung bekannt (GB 825 430, US 4 548 235).

Bei den bekannten Ventilanordnungen für Beschichtungsanlagen besteht aber das Problem, dass es wegen unterschiedlicher und nicht genau definierbarer Schaltzeiten zu Steuerüberschneidungen und entsprechenden Prozessstörungen kommen kann. Demgemäß liegt der Erfindung die Aufgabe zu Grunde, eine Ventilanordnung gemäß dem Oberbegriff des Anspruchs 1 anzugeben, die eine genauere Ventilsteuerung ohne Überschneidungen und entsprechende Prozessstörungen ermöglicht.

Diese Aufgabe wird durch die Merkmale des unabhängigen Patentanspruchs gelöst.

In Weiterbildung der Erfindung besteht die Möglichkeit, dass das Steuergehäuse der Ventilanordnung eine von der Ventileinheit lösbare und gegen ein anderes Steuergehäuse auswechselbare Moduleinheit bildet. Das andere Steuergehäuse kann beispielsweise ein Magnetventil zur Steuerung der Ventilbetätigung enthalten.

An dem in der Zeichnung dargestellten bevorzugten Ausführungsbeispiel wird die Erfindung näher erläutert. Es zeigen:
- Fig. 1: einen Schnitt durch die Ventilanordnung längs der Ventilnadelachse;
- Fig. 2: eine Einzeldarstellung einer Ventileinheit der Anordnung nach Fig. 1;
- Fig. 3: eine Seitenansicht der in Fig. 2 dargestellten Ventileinheit;
- Fig. 4: eine Seitenansicht einer Ventileinheit ähnlich Fig. 3, jedoch mit einem anderen Steuergehäuse;
- Fig. 5: die Seitenansicht der Steuereinheit gemäß Fig. 4, in der jedoch das dort gezeigte Steuergehäuse durch ein Magnetventil ersetzt ist.

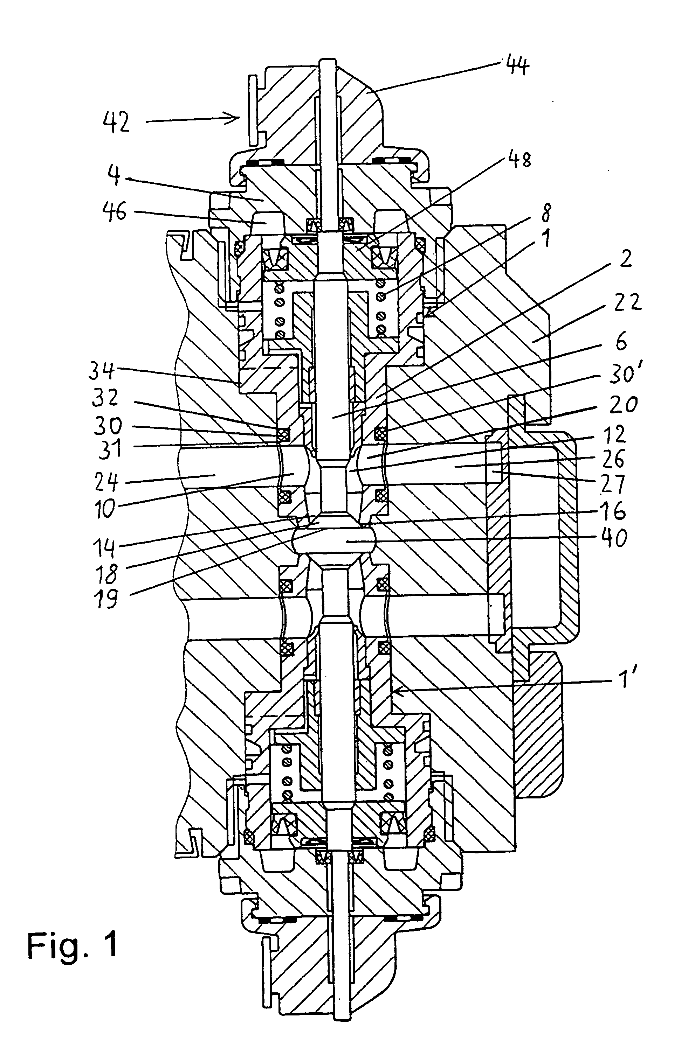

In Fig. 1 ist eine erste Ventileinheit 1 erkennbar, die hauptsächlich aus einem allgemein zylindrischen Innengehäuse 2, einem auf das äußere Ende des Innengehäuses 2 aufgesetzten Endgehäuse 4 und einer darin längs ihrer Achse verschiebbar gelagerten Ventilnadel 6 besteht, welche von einer Druckfeder 8 mittels der aus der Zeichnung ersichtlichen Konstruktion in Ventilschließstellung beaufschlagt ist. Senkrecht zur Ventilnadelachse führt durch die zylindrische Wand des Innengehäuses 2 ein Einlaßkanal 10 für das Beschichtungsmaterial, der durch den Innenraum 12 der Ventileinheit 1 mit einer kreisförmigen Auslaßöffnung 14 in Verbindung steht, welche an dem zu dem Endgehäuse 4 entgegengesetzten zylindrischen Ende des Innengehäuses 2 einen konischen Ventilsitz 16 bildet. In der dargestellten Schließstellung liegt an dem Ventilsitz die entsprechend konische, sich in Richtung des Innenraums 12 verjüngende Dichtfläche 18 der Ventilnadel 6 an. Die konische Dichtfläche 18 bildet das freie Ende der Ventilnadel und verläuft bis zu deren ebenen, senkrecht zur Nadelachse liegenden Stirnfläche 19, die in der Schließstellung etwa mit dem axial äußersten Rand des zylindrischen Innengehäuses 2 fluchtet.

Bei dem dargestellten Beispiel steht der Einlaßkanal 10 über den Innenraum 12 ferner mit einem zu dem Kanal 10 koaxial auf der gegenüberliegenden Seite durch die Wand des Innengehäuses 2 führenden Rücklaufkanal 20 in Verbindung. Zumindest bei geschlossenem Ventil zirkuliert das Beschichtungsmaterial kontinuierlich durch die Kanäle 10 und 20 von und zu einem externen Umlaufsystem. Darstellungsgemäß ist die bisher beschriebene Ventileinheit weitgehend rotationssymmetrisch, d.h. mit Ausnahme einer noch zu erläuternden Positioniernase, und auch die Kanäle 10 und 20 sind bezüglich der Nadelachse symmetrisch zueinander.

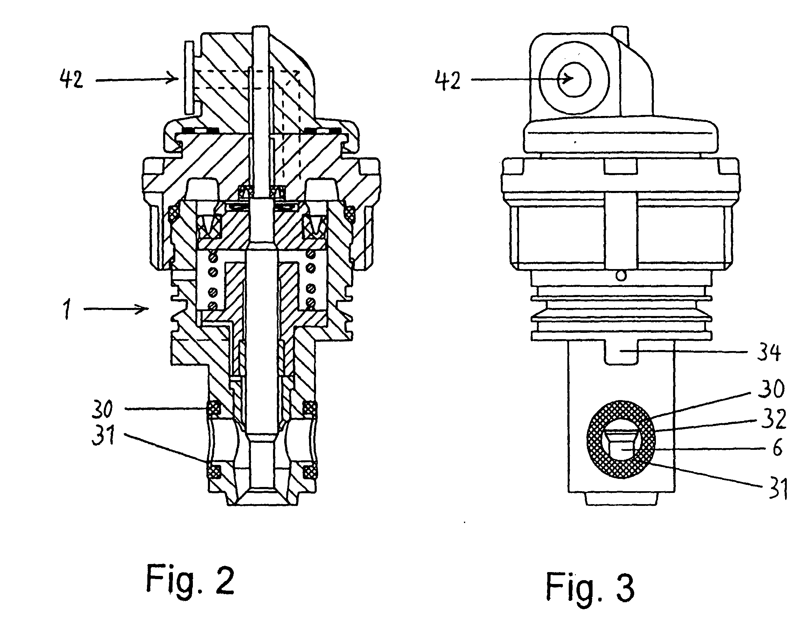

Die beschriebene Ventileinheit 1, die in Fig. 2 zur Verdeutlichung auch für sich allein dargestellt ist, sitzt gemäß Fig. 1 in einem entsprechend den zylindrischen Außenflächen des Gehäuseteils allgemein hohlzylindrisch geformten Innenraum eines äußeren Gehäusekörpers 22, bei dem es sich beispielsweise um einen Farbwechselblock handeln kann. Ebenso könnte die Ventileinheit 1 auch in einem Funktionsventilblock z.B. innerhalb eines Zerstäubers sitzen. Der äußere Gehäusekörper 22 enthält mit den Kanälen 10 und 20 des Innengehäuses 2 fluchtende Materialzufuhr- bzw. Rücklaufkanäle 24 bzw. 26, wobei der Kanal 26 über einen weiteren Umlaufkanal 27 mit dem schon erwähnten Materialumlaufsystem verbunden ist. Wesentlich ist hierbei vor allem die jeweilige Dichtung an den aneinanderstoßenden Kanälen des Innengehäuses und des äußeren Gehäusekörpers. Sie besteht aus einem ringförmigen Dichtungselement 30 aus Elastomerwerkstoff, beispielsweise einem O-Ring, der die Stoßstelle umschließend zwischen der zylindrischen Außenfläche des Innengehäuses 2 und der das Innengehäuse umschließenden hohlzylindrischen Innenfläche des äußeren Gehäusekörpers 22 sitzt, so daß der von dem Dichtungselement gebildete Ring entsprechend den zylindrischen Flächen des Innengehäuses 2 und des Gehäusekörpers 22 gebogen ist. Auf der Seite der Kanäle 20, 26 ist symmetrisch in entsprechender Weise ein Dichtungselement 30' vorgesehen.

Bei dem dargestellten Beispiel ist das ringförmige Dichtungselement 30 in eine die Kanäle 10, 24 umgebende ringförmige Nut 32 in der zylindrischen Außenfläche des Innengehäuses 2 eingezusetzt. Das Dichtungselement 30 ist auch in den Draufsichten der Fig. 3, 4 und 5 erkennbar. Es könnte stattdessen auch in den äußeren Gehäusekörper 22 eingesetzt sein.

Zweckmäßig kann das ringförmige Dichtungselement 30 an seiner Innenseite einen parallel zu der Außenfläche des Innengehäuses 2 liegenden flachen, schmalen, flanschartigen Rand 31 (vgl. Fig. 2 und 3) haben, der in einer ihm entsprechenden, an den Kanal angrenzenden flachen Ausnehmung in der Außenseite des Innengehäuses zwischen dem äußeren Rand der Nut 32 und dem Kanal 10 angeordnet ist und somit einen spalt- und hinterschneidungsfrei abgedichteten Übergang zwischen den Kanälen 10 und 24 bildet.

Das genaue gegenseitige Fluchten der Kanäle 10 und 24 bzw. 20 und 26 wird dadurch gewährleistet, daß die Position des in den äußeren Gehäusekörper 22 eingesetzten Innengehäuses 2 der Ventileinheit 1 längs der Ventilnadelachse axial durch quer zu dieser Achse aufeinanderstoßende Konturflächen dieser Bauteile und durch parallel zur Ventilachse aneinanderstoßende Konturflächen in Verdrehrichtung definiert ist. Konstruktiv ist diese Positionierung durch eine dem Innengehäuse 2 angeformte stegartige Nase 34 realisiert, die in Fig. 1 und auch in Fig. 3 erkennbar ist.

Bei anderen, nicht dargestellten Ausführungsbeispielen der Erfindung sind nur die Einlaßkanäle 10 und 24 als Stichleitung vorgesehen, während das Innengehäuse 2 an der gegenüberliegenden Seite ohne Rücklaufkanal geschlossen ist.

Der Funktionszweck des betrachteten Ventils ist das Öffnen und Schließen der Verbindung zwischen dem Materialeinlaßkanal 10 und einem Auslaßkanal 40, der bei diesem Beispiel senkrecht zu der die Achsen der Ventilnadel 6 und der Kanäle 10, 20, 24 und 26 enthaltenden Ebene geradlinig durch den Gehäusekörper 22 führt. Eines der wesentlichen Merkmale der hier beschriebenen Ventilanordnung ist die langgestreckte Querschnittsform dieses Auslaßkanals 40 in der zu seiner Kanalachse senkrecht liegenden Ebene. Die Längsseiten der Querschnittsfläche des Kanals 40 sind gerade, so daß seine von den Öffnungen der Ventileinheit 1 und weiterer an den Kanal 40 angeschlossener Einheiten unterbrochenen Innenwände eben sind, wobei die in Fig. 1 obere Längsseite bei geschlossenem Ventil mit der ebenen Stirnfläche 19 der Ventilnadel 6 fluchten kann. Dagegen sind die Schmalseiten der Querschnittsfläche des Kanals 40 aus den eingangs erläuterten Gründen rund geformt, so daß sich ein annähernd ovaler Querschnitt ergibt. Die Richtung der Längsseiten liegt bei dem beschriebenen Beispiel parallel zu den Kanälen 10, 20, 24, 26. Wie ebenfalls schon erwähnt wurde, soll die Querschnittsform möglichst (und insoweit eventuell abweichend von der schematischen Darstellung der Zeichnung) keine wesentlichen Ecken aufweisen, doch wird schon durch die Rundung der Schmalseiten an sich eine gute Spülbarkeit erreicht.

Bei dem in Fig. 1 dargestellten Beispiel ist achsgleich auf der der Ventileinheit 1 gegenüberliegenden Seite des gemeinsamen Auslaßkanals 40 eine zweite Ventileinheit 1' angeordnet, die genau mit der Einheit 1 übereinstimmt und z.B. in einem Farbwechsler zur Einleitung von Beschichtungsmaterial einer zweiten Farbe dient. Weitere Ventileinheiten können in an sich bekannter Weise reihenartig längs der Achse des Auslaßkanals 40 seitlich neben den Einheiten 1 bzw. 1' an den Auslaßkanal angeschlossen sein.

Anstelle einer oder mehrerer der modulartig an den Kanal 40 angeschlossenen Ventileinheiten können auch andere Module mit anderen Funktionen eingesetzt werden, beispielsweise ein Drucksensor, bei denen sich derselbe Vorteil des störungsfreien Übergangs an der ebenen Kanalwand ergibt wie bei den Ventilen.

Bei dem in Fig. 1 dargestellten Beispiel wird das Ventil pneumatisch betätigt, und zwar durch Druckluft, die bei 42 in ein um 360° drehbar auf dem Endgehäuse 4 sitzendes deckelartiges Steuergehäuse 44 eintritt und durch einen (in Fig. 2 gestrichelt angedeuteten) inneren Kanal in einen Ringraum 46 gelangt, wo sie die Ventilnadel 6 mit einem Kolben 48 gegen die Kraft der Feder 8 nach unten in Öffnungsstellung drückt. Die Drehbarkeit des Gehäuses 44 erlaubt den Eintritt des Druckluftschlauches aus beliebiger Richtung.

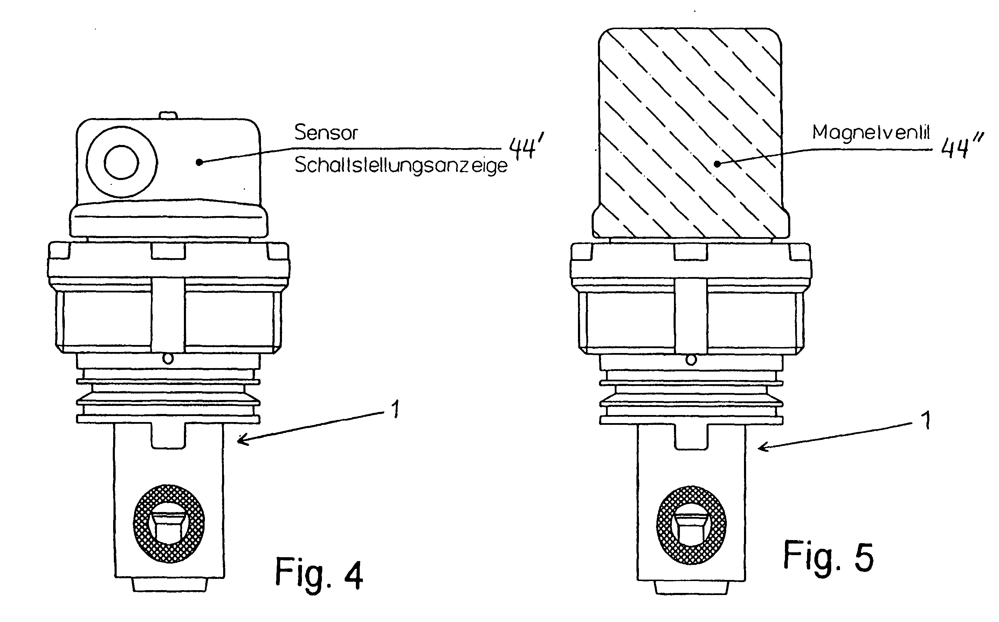

Die beschriebene Ventilanordnung ist in besonders zweckmäßiger Modulbauweise ausgeführt. Während eine Moduleinheit aus der Ventileinheit 1 mit den Innen- und Endgehäusen 2 bzw. 4 besteht, bildet das Steuergehäuse 44 eine eigene Moduleinheit, die lösbar und gegen ein anderes Steuergehäuse auswechselbar ist. Hierfür kommt u.a. das in Fig. 4 dargestellte Deckelgehäuse 44' in Betracht, das einen die Schaltstellung der Ventilnadel 6 feststellenden Schaltstellungssensor (nicht dargestellt) enthält, der ein entsprechendes Schaltstellungssignal für ein externes Steuersystem erzeugt. Es können pneumatisch oder elektrisch wirkende Schaltstellungssensoren angebracht werden. Beispielsweise kann ein magnetischer Teil oder Ansatz der Ventilnadel einen mechanischen oder elektrischen Magnetschalter betätigen. Auch ein mit Reflexion arbeitender optischer Sensor ist denkbar. Die Signalrückmeldung der Nadelstellung vermeidet den bei bekannten Ventilen auftretenden Nachteil, daß es wegen unterschiedlicher und nicht genau definierbarer Schaltzeiten zu Steuerüberschneidungen und entsprechenden Prozeßstörungen kommen kann. Auch wird eine genaue und vollständige Prozeßdatendokumentation ermöglicht. Die Schaltstellung des Ventils kann auch unmittelbar sichtbar angezeigt werden.

Eine andere Möglichkeit ist die Verwendung eines Steuergehäuses mit einer elektromagnetischen Betätigungssteuereinrichtung, beispielsweise des in Fig. 5 dargestellten Magnetventils 44", das mit dem oberen Ende der Ventilnadel 6 kuppelbar ist. Der Einbau eines Magnetventils in den Deckel eines Farbsteuerventils hat an sich den Vorteil der direkten elektrischen Ansteuerung (vorzugsweise Bus-Ansteuerung) mit kürzesten Schaltzeiten ohne die bei pneumatischer Steuerung erforderlichen Schläuche.

## Patentansprüche

1. Ventilanordnung mit einer Ventileinheit (1) zur Steuerung des Materialflusses in einer Beschichtungsanlage mit
einem ersten Kanal (10) für das Beschichtungsmaterial,
einer Öffnung (14), die durch den Innenraum (12) der Ventileinheit (1) mit dem ersten Kanal (10) verbunden ist und einen Ventilsitz (16) bildet,
einer koaxial zu dem Ventilsitz (16) in der Ventileinheit (1) verschiebbar gelagerten Ventilnadel (6), die eine bei geschlossenem Ventil an dem Ventilsitz (16) anliegende Dichtfläche (18) hat,
und einem quer zu der Achse der Ventilnadel (6) verlaufenden zweiten Kanal (40) auf der dem ersten Kanal (10) abgewandten Seite des Ventilsitzes (16),
**dadurch gekennzeichnet, dass** an oder in einem Steuergehäuse (44') der Ventileinheit (1) ein die Schaltstellung der Ventilnadel (6) feststellender pneumatisch oder elektrisch wirkender Schaltstellungssensor oder ein mit Reflexion arbeitender optischer Schaltstellungssensor angebracht oder anbringbar ist, der ein entsprechendes Schaltstellungssignal für ein externes Steuersystem erzeugt.

2. Ventilanordnung nach Anspruch 1, **dadurch gekennzeichnet, dass** die Ventileinheit (1) eine pneumatische oder elektromagnetische Betätigungssteuerung für die Ventilnadel (6) enthält.

3. Ventilanordnung nach einem der vorangehenden Ansprüche, **dadurch gekennzeichnet, dass** ein Innengehäuse (2) der Ventileinheit (1) wahlweise mit einem eine pneumatische Steuereinrichtung enthaltenden Gehäuse (44) oder stattdessen mit einer eine elektromagnetische Steuereinrichtung (44'') enthaltenden Gehäuse verbindbar ist, wobei diese Steuergehäuse gegeneinander austauschbar montiert sind.

4. Ventilanordnung nach einem der vorangehenden Ansprüche, **dadurch gekennzeichnet, dass** auf der dem Ventilsitz (16) gegenüberliegenden Seite des zweiten Kanals (40) eine weitere Ventileinheit (1') angeordnet ist, dass die beiden Ventileinheiten (1, 1') bezüglich des zweiten Kanals (40) symmetrisch ausgebildet und angeordnet sind, und dass eine Reihe mehrerer im Wesentlichen gleich ausgebildeter Ventileinheiten nebeneinander an dem ihnen gemeinsamen Kanal (40) angeordnet sind.

5. Ventilanordnung nach einem der vorangehenden Ansprüche, **dadurch gekennzeichnet, dass** die Position eines in einen äußeren Gehäusekörper (22) eingesetzten Innengehäuses (2) der Ventileinheit (1) längs der Ventilnadelachse axial durch quer zu dieser Achse aufeinanderstoßende Konturflächen (34) dieser Bauteile und durch parallel zur Ventilnadelachse aneinanderstoßende Konturflächen (34) in Verdrehrichtung definiert ist.

6. Ventilanordnung nach einem der vorhergehenden Ansprüche, **dadurch gekennzeichnet, dass** an den zweiten Kanal (40) modulartig mehrere Baueinheiten angeschlossen sind, von denen mindestens eine aus einer Ventileinheit (1, 1') besteht, während eine weitere Baueinheit einen Drucksensor oder sonstigen Sensor enthält.

7. Ventilanordnung nach einem der vorangehenden Ansprüche, **dadurch gekennzeichnet, dass** das Steuergehäuse (44') eine von der Ventileinheit (1) lösbare und gegen ein anderes Steuergehäuse (44'') auswechselbare Moduleinheit bildet.

8. Ventilanordnung nach Anspruch 7, **dadurch gekennzeichnet, dass** das Steuergehäuse (44'') ein Magnetventil oder eine andere elektromagnetische Betätigungssteuereinrichtung enthält, die mit der Ventilnadel (6) kuppelbar ist.

9. Ventilanordnung nach Anspruch 8, **dadurch gekennzeichnet, dass** die elektromagnetische Betätigungseinrichtung an eine elektrische Bus-Steuerung angeschlossen ist.

10. Ventilanordnung nach einem der vorangehenden Ansprüche, **dadurch gekennzeichnet, dass** der Innenraum (12) der Ventileinheit (1) von einem zu der Ventilnadel (6) koaxialen allgemein zylindrischen Innengehäuseteil (2) umschlossen ist, durch das quer zu der Achse der Ventilnadel (6) ein zylindrischer Kanal (10) führt,
dass das Innengehäuseteil (2) in einem äußeren Gehäusekörper (22) montiert ist, durch den ein mit dem Kanal (10) fluchtender Materialzufuhrkanal (24) führt,
und dass zwischen der zylindrischen Außenfläche des Innengehäuseteils (2) und der das Innengehäuseteil umschließenden hohlzylindrischen Innenfläche des äußeren Gehäusekörpers (22) ein die Verbindungsstelle der beiden Kanäle (10, 24) umgebendes ringförmiges Dichtungselement (30) sitzt, so dass der von dem Dichtungselement (30) gebildete Ring entsprechend den zylindrischen Flächen des Innengehäuseteils (2) und des äußeren Gehäusekörpers (22) gebogen ist.

11. Ventilanordnung nach Anspruch 10, **dadurch gekennzeichnet, dass** das ringförmige Dichtungselement (30) in eine den Kanal (10, 24) umgebende ringförmige Nut (32) in der zylindrischen Außenfläche des Innengehäuseteils (2) oder des äußeren Gehäusekörpers (22) eingesetzt und mit einem angeformten flachen Ringflansch (31) versehen ist, der sich über die dem Kanal (10, 24) zugewandte Kante der Nut (32) und die angrenzende zylindrische Gehäuseaußenfläche bis zum dem Kanal (10, 24) erstreckt.

12. Ventilanordnung nach einem der vorangehenden Ansprüche, **dadurch gekennzeichnet, dass** die Ventileinheit (1, 1') als in einem äußeren Gehäusekörper (22) einbau-bare Moduleinheit ausgebildet ist.

## Claims

1. A valve arrangement with a valve unit (1) for controlling the flow of material in a coating installation with a first passage (10) for the coating material, an opening (14), which is connected through the interior (12) of the valve unit (1) to the first passage (10) and constitutes a valve seat (16), a valve needle (6) which is moveably mounted coaxially with the valve seat (16) in the valve unit (1) and has a sealing surface (18) engaging the valve seat (16) , when the valve is closed, and a second passage (40), on the side of the valve seat (16) remote from the first passage (10), **characterised in that** mounted or mountable on or in a control housing (44') of the valve unit (1) there is a pneumatically or electrically operating switch position sensor, which determines the switch position of the valve needle (6), or an optical switch position sensor operating with reflection, which produces a corresponding switch position signal for an external control system.

2. A valve arrangement as claimed in claim 1, **characterised in that** the valve unit (1) includes a pneumatic or electromagnetic actuation controller for the valve needle (6).

3. A valve arrangement as claimed in one of the preceding claims, **characterised in that** an inner housing (2) of the valve unit (1) is selectably connectable to a housing (44) containing a pneumatic control device or alternatively to a housing containing an electromagnetic control device (44"), these control housings being installed so as to be interchangeable with one another.

4. A valve arrangement as claimed in one of the preceding claims, **characterised in that** arranged on the side of the second passage (40) opposite to the valve seat (16) there is a further valve unit (1'), that the two valve units (1, 1') are symmetrically constructed and arranged with respect to the second passage (40) and that a series of a plurality of valve units of substantially the same construction are arranged next to one another on the passage (40) common to them.

5. A valve arrangement as claimed in one of the preceding claims **characterised in that** the position of an inner housing (2), inserted into an outer housing body (22), of the valve unit (1) along the valve needle axis is defined axially by contour surfaces (34), abutting one another transversely to this axis, of these components and by contour surfaces (34), abutting one another parallel to the valve needle axis, in the direction of rotation.

6. A valve arrangement as claimed in one of the preceding claims, **characterised in that** connected to the second passage (40) in a modular manner is a plurality of units, of which at least one consists of a valve unit (1, 1') whilst a further unit includes a pressure sensor or other sensor.

7. A valve arrangement as claimed in one of the preceding claims, **characterised in that** the control housing (44') constitutes a modular unit, which is releasable from the valve unit (1) and may be replaced by another control housing (44").

8. A valve arrangement as claimed in claim 7, **characterised in that** the control housing (44") contains a magnetic valve or another electromagnetic actuation control device, which may be coupled to the valve needle (6).

9. A valve arrangement as claimed in claim 8, **characterised in that** the electromagnetic actuating device is connected to an electric bus controller.

10. A valve arrangement as claimed in one of the preceding claims, **characterised in that** the interior (12) of the valve unit (1) is surrounded by a generally cylindrical inner housing portion (2) coaxial with the valve needle (6),through which a cylindrical passage (10) extends transversely to the axis of the valve needle (6), that the inner housing portion (2) is mounted in an outer housing body (22), through which a material supply passage (24) in alignment with the passage (10) leads, and that situated between the cylindrical outer surface of the inner housing portion (2) and the hollow cylindrical inner surface, surrounding the inner housing portion of the outer housing body (22) there is an annular sealing element (30) surrounding the connection point of the two passages (10, 24) so that the ring constituted by the sealing element (30) is bent in accordance with the cylindrical surfaces of the inner housing portion (2) and of the outer housing body (22).

11. A valve arrangement as claimed in claim 10, **characterised in that** the annular sealing element (30) is inserted into an annular groove (32), which surrounds the passage (10, 24), in the cylindrical outer surface of the inner housing portion (2) or of the outer housing body (22) and is provided with an integrally formed flat annular flange (31), which extends over the edge, directed towards the passage (10, 24), of the groove (32) and the adjoining cylindrical housing outer surface to the passage (10, 24).

12. A valve arrangement as claimed in one of the preceding claims, **characterised in that** the valve unit (1, 1') is constructed in the form of a modular unit, which may be installed into an outer housing body (22).

## Revendications

1. Ensemble de soupape avec une unité de soupape (1) pour la commande de l'écoulement de la matière dans une installation de revêtement avec un premier canal (10) pour la matière du revêtement, une ouverture (14) reliée par le volume intérieur (12) de l'unité de soupape (1) au premier canal (10) et un siège de soupape (16),
un pointeau de soupape (6) monté coulissant dans l'unité de soupape (1), coaxialement au siège de soupape (16), qui présente une surface d'étanchéité (18) s'appliquant contre le siège de soupape (6) lorsque la soupape est fermée,
et un deuxième canal (40) s'étendant transversalement à l'axe du pointeau de soupape (6) sur le côté du siège de soupape (16) tourné à l'opposé du premier canal (10),
**caractérisé par le fait que** sur ou dans un boîtier de commande (44') de l'unité de soupape (1) est ou peut être placé un capteur de position de commutation agissant pneumatiquement ou électriquement, constatant la position de commutation du pointeau de soupape (6) ou un capteur de position de commutation optique travaillant par réflexion, qui produit un signal de position de commutation correspondant pour un système de commande externe.

2. Ensemble de soupapes selon la revendication 1, **caractérisé en ce que** l'unité de soupape (1) contient une commande d'actionnement pneumatique ou électromagnétique pour le pointeau de soupape (6).

3. Ensemble de soupapes selon l'une des revendications précédentes,
**caractérisé en ce qu'**un boîtier intérieur (2) de l'unité de soupape (1) peut être relié au choix à un boîtier (44) contenant un dispositif de commande pneumatique ou, à la place de ceci, à un boîtier contenant un dispositif de commande électromagnétique (44"), ces boîtiers de commande étant montés de manière interchangeable.

4. Ensemble de soupapes selon l'une des revendications précédentes, **caractérisé en ce que** sur le côté du deuxième canal (40) opposé au siège de soupape (16), est disposée une autre unité de soupape (1'), **en ce que** les deux unités de soupape (1, 1') sont réalisées et disposées symétriquement par rapport au deuxième canal (40), et **en ce qu'**une série de plusieurs unités de soupape réalisées sensiblement identiques sont disposées côte à côte sur le canal (40) qui leur est commun.

5. Ensemble de soupapes selon l'une des revendications précédentes, **caractérisé en ce que** la position d'un boîtier intérieur (2) de l'unité de soupape (1), inséré dans un corps de boîtier extérieur (22), le long de l'axe du pointeau de soupape axialement, est définie dans le sens de rotation par des surfaces de contour (34) de ces composants, butant les unes sur les autres transversalement à cet axe, et par des surfaces de contour (34) butant les unes contre les autres parallèlement à l'axe du pointeau de soupape.

6. Ensemble de soupapes selon l'une des revendications précédentes, **caractérisé en ce qu'**au deuxième canal (40) sont raccordées plusieurs unités de construction de type modulaire dont au moins une est constituée d'une unité de soupape (1, 1'), tandis qu'une autre unité de construction contient un capteur de pression ou autre capteur.

7. Ensemble de soupape selon l'une des revendications précédentes, **caractérisé par le fait que** le boîtier de commande (44') forme une unité modulaire pouvant être séparée de l'unité de soupape (1) et échangée contre un autre boîtier de commande (44").

8. Ensemble de soupape selon la revendication 7, **caractérisé par le fait que** le boîtier de commande (44") comporte une soupape magnétique ou autre dispositif de commande à actionnement électromagnétique qui peut être couplée au pointeau de soupape (6).

9. Ensemble de soupape selon la revendication 8, **caractérisé par le fait que** le dispositif d'actionnement électromagnétique est relié à une commande- BUS électrique.

10. Ensemble de soupapes selon l'une des revendications précédentes, **caractérisé en ce que** le volume intérieur (12) de l'unité de soupape (1) est enfermé par une partie de boîtier intérieure (2) cylindrique généralement coaxiale au pointeau de soupape (6), à travers laquelle un canal (10) passe transversalement à l'axe du pointeau de soupape (6), **en ce que** la partie de boîtier intérieure (2) est montée dans un corps de boîtier (22) extérieur à travers lequel passe un canal d'amenée de matière (24) aligné avec le canal (10), et **en ce qu'**entre la surface extérieure cylindrique de la partie de boîtier intérieure (2) et la surface intérieure cylindrique creuse enfermant la partie de boîtier intérieure, du corps de boîtier (22) extérieur, se trouve un élément d'étanchéité (30) de forme annulaire entourant le point de liaison des deux canaux (10, 24), de sorte que l'anneau formé par l'élément d'étanchéité (30) est courbé conformément aux surfaces cylindriques de la partie de boîtier intérieure (2) et du corps de boîtier extérieur (22).

11. Ensemble de soupapes selon la revendication 10, **caractérisé en ce que** l'élément d'étanchéité (30) de forme annulaire est inséré dans une rainure (32) de forme annulaire entourant le canal (10, 24), dans la surface extérieure cylindrique de la partie de boîtier intérieure (2) ou du corps de boîtier extérieur (22), et est pourvu d'une bride annulaire (31) venue de moulage qui s'étend sur le bord de la rainure (32) tourné vers le canal (10, 24) et la surface extérieure cylindrique adjacente du boîtier jusqu'au canal (10, 24).

12. Ensemble de soupape selon l'une des revendications précédentes, **caractérisé par le fait que** l'unité de soupape (1, 1') est conformée comme une unité modulaire pouvant être montée dans un corps de boîtier (22).
